# EUROPÄISCHE PATENTSCHRIFT

(11) **EP 0 752 542 B1**
(45) Veröffentlichungstag und Bekanntmachung des Hinweises auf die Patenterteilung: **08.12.1999**
(21) Anmeldenummer: 96109047.9
(22) Anmeldetag: 05.06.1996
(51) Int. Cl.: F16G 3/04

(54) **Mechanischer Transportbandverbinder**
Mechanical connecting device for conveyor belt
Dispositif de jonction mécanique de courroie transporteuse

(30) Priorität: 04.07.1995 DE 19524384
(43) Veröffentlichungstag der Anmeldung: 08.01.1997
(73) Patentinhaber: Sülzle, Wilhelm, 72348 Rosenfeld (DE)
(72) Erfinder: Sülzle, Walther, D 72348 Rosenfeld (DE)
(74) Vertreter: Säger, Manfred, Dipl.-Ing.

(56) Entgegenhaltungen:
- DE-C- 335 215
- DE-C- 692 763
- FR-A- 388 483
- FR-A- 992 264
- FR-A- 1 069 989
- GB-A- 124 726

## Beschreibung

Die Erfindung betrifft einen mechanischen Bandverbinder gemäß dem Oberbegriff des Hauptanspruches.

Derartige, beispielsweise aus Bandstahl gefertigte Verbinder sind bekannt. Sie kommen meist V-förmig vorgebogen auf den Markt. Dabei sind die Enden der Schenkel zugespitzt und nach innen unter einem bestimmten Winkel angestellt. Die Verbinder dienen der lösbaren Endlosmachung von Prozeß-, Förder-, Transport-, oder Filterbändern und ähnlichem (FR-A-992 264).

Zur Erstellung einer Gelenkverbindung werden die Verbinder an beiden Enden eines rechtwinklig abgelängten Bandes eingebracht, wobei die Ösen kammartig ineinander greifen. Mittels eines durchgeschobenen Querstifts (Kupplungsstab) werden dann die Enden gelenkig und lösbar miteinander verbunden.

Gegenüber den ebenfalls bekannten Draht- oder Riemenhaken, welche unterschiedlich lange und damit versetzte Schenkel und Spitzen (lang-kurz-lang) haben, hat die Verwendung derartiger Verbinder den Nachteil, daß die Verbindungsfestigkeit ca. 30-40 % niedriger liegt. Dies rührt daher, daß die Spitzen sowohl auf der Bandvorderseite als auf der Bandrückseite auf gleicher Höhe in das Band eindringen, und dieses auf einer Linie perforieren. Hinzu kommt, daß die im Vergleich zu Drahthaken groberen Verbinderspitzen, insbesondere beim Eindringen in harte Bandmaterialien, relativ viele, der zur Bandfestigkeit beitragenden Zugkörper durchtrennen.

Trotz der oben geschilderten Nachteile werden Verbinder aus Bandstahl häufig verwendet, da sie eine glattere und abgedecktere Verbindung ergeben. Weitere Vorteile sind die Abriebfestigkeit der Verbinder durch die breitere Auflagefläche, z.B. bei gleitend abtragenden Bändern.

Der Erfindung liegt die Aufgabe zugrunde, einen gattungsgemäßen Verbinder aus Bandstahl nach dem Oberbegriff des Hauptanspruches so auszubilden, daß die Verbindungsfestigkeit bzw. die Belastbarkeit der Verbindung und deren Elastizität, insbesondere gegenüber der Balligkeit der Walzen, über die die Bänder laufen, wesentlich erhöht wird. Diese Aufgabe wird bei einem gattungsgemäßen Verbinder gemäß dem Oberbegriff des Hauptanspruches erfindungsgemäß durch dessen kennzeichnende Merkmale gelöst.

Die Schenkel der ersten und zweiten Reihe von Schenkeln weisen jeweils zwei unterschiedliche Längen auf, vorzugsweise bis zu insgesamt vier unterschiedliche Längen, wobei diese unterschiedlichen Längenmaße miteinander abwechseln. Bei der Montage der Bandverbindung stechen dadurch die am Ende der Schenkel angeordneten Verbinderspitzen, in jeweils zwei Ebenen auf der Bandunter- und -oberseite in das Band ein, durchdringen dieses, und werden dann auf der Gegenseite wieder abgebogen. Durch diese spezielle Anordnung wird das Band statt in einer in bis zu vier Ebenen durchdrungen. Durch die versetzt angeordneten Einstechpunkte entsteht im Bandzugträger keine einheitliche Bruchlinie bzw. Perforation. Die statische Verbindungsfestigkeit erhöht sich, je nach Bandart, um bis zu 75 %. Bevorzugt ist eine Anordnung, in der sowohl die erste als auch die zweite Reihe von Schenkeln unterschiedliche, einander abwechselnde Längen aufweist, so daß die einzelnen Schenkel insgesamt vier alternierend angeordnete Längen aufweisen, wobei die an den Verlängerungen der Schenkel angeordneten Spitzen auf vier verschiedenen Ebenen einstechen. Dabei werden die unterschiedlichen Längen derart gewählt, daß die Eindringpunkte der Spitzen sowohl in Quer- als auch in Längsrichtung in verschiedenen Ebenen angeordnet sind. Dadurch wird die Verbindungsfestigkeit weiter erhöht. Der durchgehende Steg befindet sich bei dieser Ausführungsform bevorzugt auf der Bandoberseite, was sich auf das Umlaufen der Trommeln vorteilhaft auswirkt. Die unterbrochenen weiteren Stege werden an der Bandunterseite montiert, was sich günstig beim Ablaufen, insbesondere bei balligen Trommeln auswirkt. Die weitere Fixierung der Schenkel an einem, wenn auch unterbrochenen weiteren Steg, stellt sicher, daß die Spitzen geradlinig auch in härteste Bandmaterialien eindringen können, ohne daß diese sich verbiegen oder abgewiesen werden. Dies stellt ebenso sicher, daß sich die Beschädigung des Bandzugkörpers auf ein absolutes Minimum beschränkt. Die beiden Stege (durchgehend auf der Bandoberseite und unterbrochen auf der Bandunterseite) bewirken eine Erhöhung der Klemmwirkung und tragen ebenfalls zur Erhöhung der Verbindungsfestigkeit bei, da der Haltepunkt der Verbindung von den Verbinderspitzen wegverlagert wird. Bei herkömmlichen Verbindern ist nachteilig, daß beim Montieren der Verbindung in weiche Bänder am Verbinderende eine Abknickung bis zu 10° auftritt. Die gemäß der Erfindung versetzt angeordneten Spitzen führen zu einer Abstützung im Verbindungsbereich und verhindern damit das Abknicken. Hierbei ist von Vorteil, daß durch die Anordnung des unterbrochenen weiteren Steges die Materialdicke des Verbinders ohne Trennwirkungseinbußen verringert werden kann.

Die Unteransprüche geben bevorzugte Ausführungsformen der Erfindung wieder.

Die bevorzugten Ausführungsformen der Erfindung werden nachfolgend anhand der Zeichnungen beispielhaft näher erläutert. Hierin zeigt:
- Figur 1: Verbinder in ungeknicktem Zustand;
- Figur 2: V-förmig vorgebogenen Verbinder in geschnittener Seitenansicht
- Figur 3: geschnittene Seitenansicht eines montierten Verbinders; und
- Figur 4: eine Perspektivdarstellung der beiden offenen Enden eines Bandes, in welche jeweils ein viergliedriges Verbindungselement eingebracht worden ist.

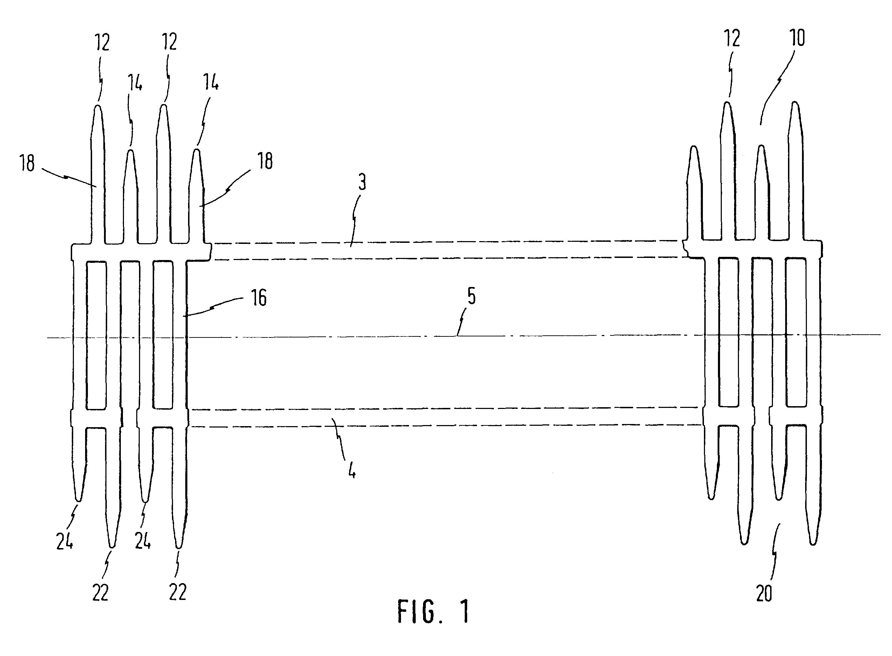

In Fig. 1 sind die beiden Enden eines Verbinderstreifens im ungeknickten bzw. ungebogenen Zustand in einer Draufsicht schematisch dargestellt. Der Biegebereich 5 ergibt beim Umbiegen Verbinderösen 8, die jeweils mit den Verbinderösen eines zweiten Verbinders kammartig ineinandergreifen und durch einen Querstift 6 verbunden werden.

Vom Biegebereich 5 aus werden die einzelnen Längen der Schenkel der Reihen gemessen. An der Verbinderseite, die durch den durchgehenden Steg 3 gekennzeichnet ist, befindet sich der längste Schenkel 12 des Verbinders. Der drittlängste Schenkel 14 befindet sich ebenfalls an dieser Seite. Die Schenkel 12, 14 sind alternierend angeordnet.

An der Verbinderseite mit einem weiteren unterbrochenen Steg 4 ist der zweitlängste Schenkel 22 und der kürzeste Schenkel 24 angeordnet. Die Schenkel 22, 24 sind ebenfalls alternierend angeordnet.

In dem in Fig. 1 dargestellten Ausführungsbeispiel stellt sich die Folge der unterschiedlichen Schenkellängen wie folgt dar: 12-22-14-24 usw.. Eine Umkehrung oder andere Anordnung dieser Schenkelanordnung ist möglich und denkbar, z.B. 12-24-14-22 usw..

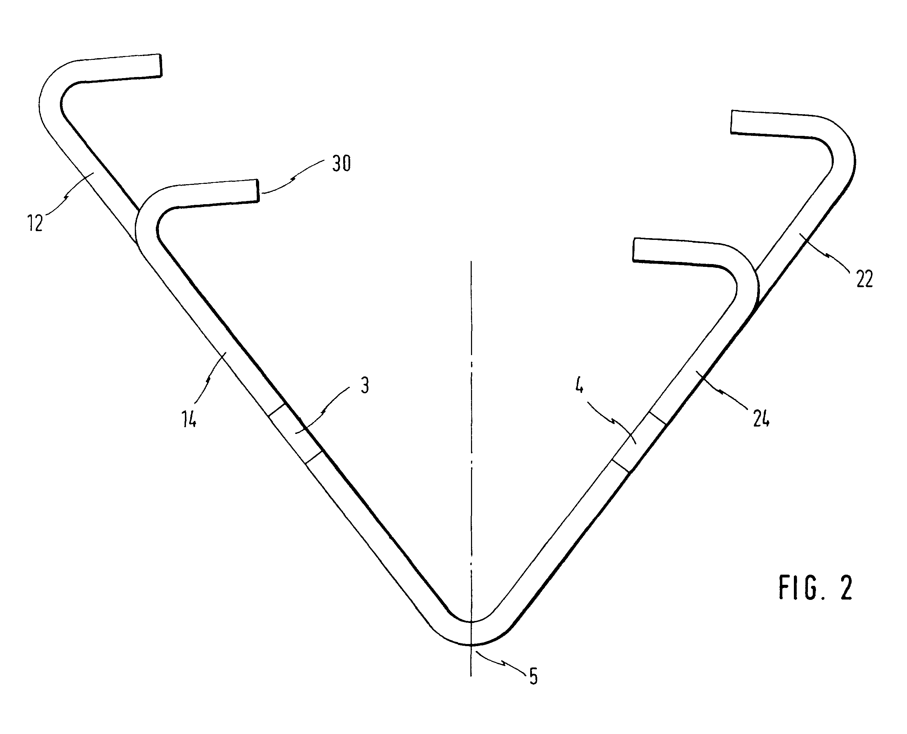

In Fig. 2 ist ein Verbinder in vorgebogener V-Form dargestellt. Hier wird gezeigt, daß die an den unterschiedlich langen Schenkeln angebrachten Spitzen 30, in vier unterschiedlichen Ebenen angeordnet sind.

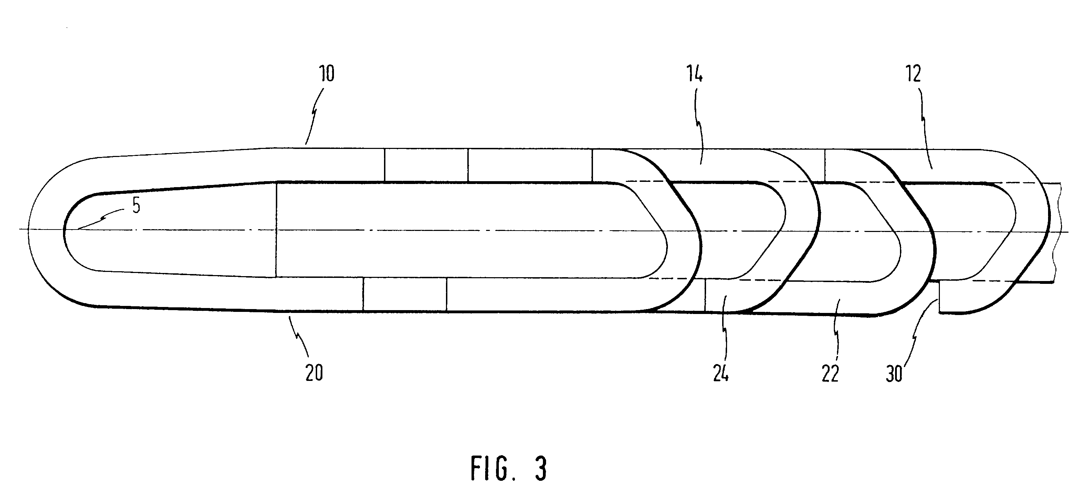

In Fig. 3 ist ein Verbinder in montiertem Zustand im Schnitt dargestellt. Dabei ist mit Bezugsziffer 1 ein offenes Ende eines Bandes bezeichnet.

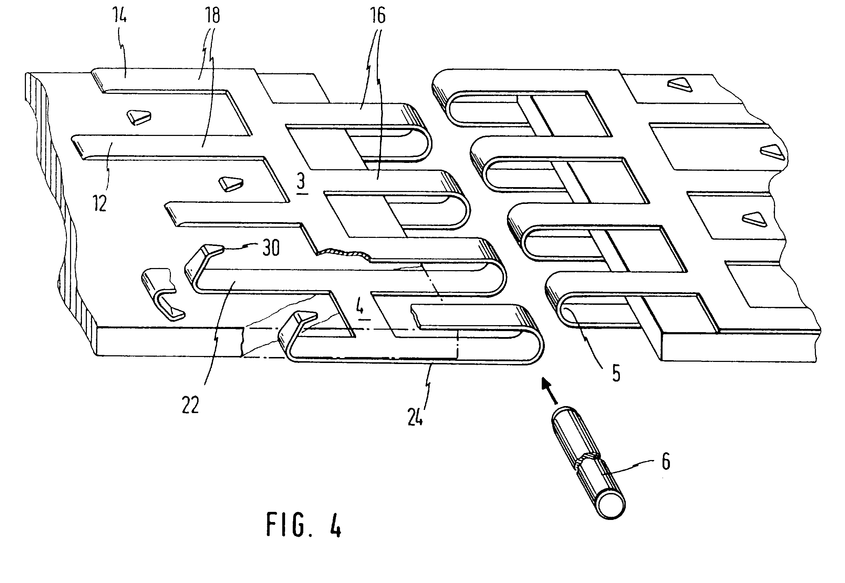

In Fig. 4 wird die Anordnung der verschieden langen Schenkel an den Enden 1, 2 des Bandes dargestellt. Die perspektivische Darstellung zeigt die beiden offenen Enden 1 und 2 eines Bandes, in welche beispielsweise je ein viergliedriges Verbinderelement eingebracht worden ist. Die mit den in Fig. 1 bis 3 identischen Teile weisen in Fig. 4 dieselben Bezugsziffern auf. Mit 6 ist der Kupplungsstab bezeichnet, der die beiden armierten Enden 1 und 2 des Bandes nach ihrem kammartigen Ineinanderschieben zu einem Endlosband verbindet.

## Patentansprüche

1. Mechanischer Bandverbinder aus Bandstahl zum Verbinden der offenen Enden von Prozeß-, Förder-, Transport- und/oder Filterbändern, mit einer ersten Reihe (10) und einer zweiten Reihe (20) von beiderseits eines Knickbereichs (5) parallel zueinander im Abstand voneinander angeordneten Schenkeln, die in dem Knickbereich (5) zu Verbindungsösen biegbar sind und deren abgebogene Spitzen dabei in den Werkstoff des Bandes eindringen, wobei die Schenkel (12, 14, 22, 24) der beiden Reihen (10, 20) sich beiderseits des Knickbereichs (5) in ihrer Längserstreckung erstrecken und in der ersten Reihe (10) sich in ersten Abschnitten (16) bis zu einem quer zu ihrer Längserstreckung verlaufenden, durchgehenden Steg (3) erstrecken, sowie an diesem Steg (3) festgelegt sind, und wobei die einander benachbarten Schenkel (12, 14 bzw. 22, 24) jeder Reihe (10, 20) bezogen auf den Knickbereich (5) unterschiedliche Längen aufweisen,
**dadurch gekennzeichnet,**
daß je zwei Schenkel (22, 24) der zweiten Reihe (20) durch einen weiteren Steg (4) miteinander zu einem Schenkelpaar verbunden sind,
daß der weitere Steg (4) in Richtung zu den unmittelbar benachbarten Schenkelpaaren (22, 24) der zweiten Reihe (20) hin unterbrochen ist, und
daß den Lücken zwischen den Schenkeln (22, 24) der zweiten Reihe (20) die sich an die ersten Abschnitte (16) an dem durchgehenden Steg (3) anschließenden zweiten Abschnitte (18) der Schenkel (12, 14) der ersten Reihe (10) gegenüberstehen.

2. Verbinder nach Anspruch 1, dadurch gekennzeichnet, daß der durchgehende Steg (3) und die weiteren Stege (4) mit gleichem Abstand, d.h. symmetrisch zum Biegebereich (5) angeordnet sind.

3. Verbinder nach Anspruch 1, dadurch gekennzeichnet, daß der durchgehende Steg (3) und die unterbrochenen weiteren Stege (4) mit ungleichem Abstand, d.h. unsymmetrisch zum Biegebereich (5) angeordnet sind.

## Claims

1. A mechanical belt connector of steel strip for connecting the open ends of process, conveyor, transportation and/or filter belts, comprising a first row (10) and a second row (20) of limbs which are arranged on both sides of a bend region (5) in mutually parallel relationship at a spacing from each other and which are bendable in the bend region (5) to form connecting eyes and the bent-over tips of which in that case penetrate into the material of the belt, wherein the limbs (12, 14, 22, 24) of the two rows (10, 20) extend on both sides of the bend region (5) in their longitudinal extent and in the first row (10) extend in first portions (16) to a continuous bar (3) which extends transversely with respect to their longitudinal extent, and are fixed to said bar (3), and wherein the mutually adjacent limbs (12, 14 and 22, 24 respectively) of each row (10, 20) are of different lengths in relation to the bend region (5),
characterised in that
each two limbs (22, 24) of the second row (20) are connected together to form a respective pair of limbs by a further bar (4),
the further bar (4) is interrupted in a direction towards the immediately adjacent pairs of limbs (22, 24) of the second row (20), and
disposed opposite the gaps between the limbs (22, 24) of the second row (20) are the second portions (18) of the limbs (12, 14) of the first row (10), said second portions (18) adjoining the first portions (16) on the continuous bar (3).

2. A connector according to claim 1 characterised in that the continuous bar (3) and the further bars (4) are arranged at an equal spacing, that is to say symmetrically with respect to the bend region (5).

3. A connector according to claim 1 characterised in that the continuous bar (3) and the interrupted further bars (4) are arranged at unequal spacings, that is to say asymmetrically with respect to the bend region (5).

## Revendications

1. Dispositif pour la jonction mécanique des extrémités libres de bandes de travail, de convoyage, de transport et/ou de filtrage, ce dispositif ayant une première rangée (10) et une seconde rangée (20) de branches (12,14,22,24) montées espacées les unes des autres et parallèles les unes par rapport aux autres de part et d'autre d'une zone (5) de cintrage, lesdites branches sont pliables pour former des crochets à oeil de liaison dans la zone (5) de cintrage et les pointes desdites branches pénètrent ainsi dans le matériau de la bande, les branches (12,14,22,24) des deux rangées (10,20) s'étendent selon leur extension longitudinale de part et d'autre de la zone (5) de cintrage et, dans la première rangée (10), lesdites branches s'étendent au niveau du premier segment (16) jusqu'à une barrette continue (3) s'étendant transversalement à leur extension longitudinale, lesdites branches étant fixées à cette barrette (3), les branches voisines (12,14, respectivement 22,24) de chaque rangée (10,20) et reliées à la zone (5) de cintrage présentent des longueurs différentes,
ce dispositif étant **caractérisé** en ce que :
- les branches (22,24) de la seconde rangée (20) sont reliées entre elles par des barrettes (4) afin de former des paires,
- les barrettes (4) s'interrompent entre les paires de branches (22,24) voisines de la seconde rangée (20), et
- les espaces vides entre les branches (22,24) de la seconde rangée (20) sont situés face au vide entre les premiers segments (16) reliés à la barrette continue (3) qui reçoit les segments (18) des branches (12,14) de la première rangée (10).

2. Dispositif de jonction selon la revendication 1, **caractérisé** en ce que la barrette continue (3) et les barrettes (4) sont placées à la même distance, c'est-à-dire symétriquement par rapport à la zone (5) de cintrage.

3. Dispositif de jonction selon la revendication 1, **caractérisé** en ce que la barrette continue (3) et les barrettes (4) interrompues sont placées à des distances différentes, c'est-à-dire asymétriquement, par rapport à la zone (5) de cintrage.
